# EUROPEAN PATENT SPECIFICATION

(11) **EP 3 104 505 B1**
(45) Date of publication and mention of the grant of the patent: **12.09.2018**
(21) Application number: 16166056.8
(22) Date of filing: 19.04.2016
(51) Int. Cl.: H02K 29/08, H02K 7/14, H02K 11/215, F04D 5/00

(54) **PUMP DEVICE**
PUMPVORRICHTUNG
DISPOSITIF DE POMPAGE

(30) Priority: 29.05.2015 JP 2015110880
(43) Date of publication of application: 14.12.2016
(73) Proprietor: NIDEC TOSOK CORPORATION, Kanagawa 252-8570 (JP)
(72) Inventor: KOBAYASHI, Yoshiyuki, Zama City, Kanagawa 252-8570 (JP); HONMA, Kazuhiro, Zama City, Kanagawa 252-8570 (JP); HIGUCHI, Koji, Zama City, Kanagawa 252-8570 (JP); HASHIMOTO, Yutaka, Zama City, Kanagawa 252-8570 (JP)
(74) Representative: Zimmermann, Tankred Klaus

(56) References cited:
- US-A- 5 053 664
- US-A1- 2001 033 800
- US-A1- 2004 108 779
- US-A1- 2009 121 590

## Description

### Field of the Disclosure

The present disclosure relates to a pump device.

### Background

In the past, an electric pump has been mounted on an automatic transmission. The electric pump described in Japanese Patent Application Publication No. 2011-94553 comprises a pump section, a motor section which drives the pump section and a motor drive control section which controls the motor section.

In the above-described motor section, a rotational position of a motor rotor is detected by a rotation sensor which detects a magnetic flux of a sensor magnet attached to the motor rotor. Since an electric current supplied to a stator is regulated based on the detected rotational position of the motor rotor, it is possible to increase the efficiency of the motor.

However, when assembling the motor section, an assembly error may occur among respective components. This may cause a relative position of the rotation sensor to the sensor magnet to be displaced. In such case, it is difficult for the rotation sensor to detect the rotational position of the motor rotor accurately, and it is therefore difficult to fulfill high efficiency of the motor section. Accordingly, when assembling the motor section, it is necessary to adjust the relative position of the rotation sensor to the sensor magnet after the rotation sensor and the sensor magnet have been assembled.

In order to adjust the relative position of the rotation sensor, it is necessary to rotate a rotary axis of the motor section by connecting other drive units to the rotary axis. Then, by detecting an output of the rotation sensor, the relative position of the rotation sensor to the sensor magnet is optimized.

In the electric pump disclosed in the aforementioned literature, however, the motor section and the pump section share a common rotary axis. For this reason, when assembling the electric pump, an end portion of the rotary axis is covered by a pump base. Therefore, other drive units may not be connected to the rotary axis, thereby causing a problem that the adjustment of the relative position of the rotation sensor, which has been carried out by the separate motor section, may not be performed.

In consideration of the above-mentioned technical problem, one embodiment of the present disclosure is a pump device having a single common shaft shared by both a motor portion and a pump portion, and has an object of providing a pump device having a structure which is capable of adjusting a relative position of a rotation sensor after the motor portion and the pump portion have been assembled.
US 2004/0108779 A1 discloses an electrical motor for a pump drive with a starter and a rotor for driving a pump impeller. The stator is embedded in a plastic body and the plastic body forms a chamber together with a stator in which the rotor is received. The chamber is closed at one shaft end of the rotor and the rotor is connected to the opposite shaft end to the pump impeller.
US 5,053,664 discloses a motor-driven fuel pump including a brushless motor, a motor housing for enclosing the brushless motor, and a pump section adapted to be driven by the brushless motor for sucking fuel and pumping the same into the motor housing.
US 2009/012159 A1 discloses a server motor equipped with a rotary shaft, a rotor rotated integrally with the rotary shaft, a stator that is separated from the rotor, and an angle detecting device that detects an angle of rotation of the rotary shaft.
US 2001/0033800 A1 discloses a magnetic coupling pump comprising a motor chamber and a pump chamber, through which a cooling water flows, a substantially cylindrical-cup shaped rotor arranged in the pump chamber, and a circuit board disposed in the motor chamber to be in parallel to an end service of the rotor. The pump also comprises a magnet detecting element which is mounted on a portion of the circuit board which faces a magnet portion of the rotor.

### Summary

The invention is defined in the independent claims.

One embodiment of a pump device according to the present disclosure comprises: a motor portion having a shaft having its center on an axially extending center axis, a rotor which is fixed to the shaft, and a stator which is disposed on a radially outer side of the rotor; a pump portion which is disposed on one axial side of the motor portion, and driven by the motor portion; a cylindrical housing which holds the motor portion and the pump portion, and has an opening portion on the other axial side; and a motor cover which is attached to the other axial side of the housing, and covers the other axial side of the motor portion, the motor portion including: a sensor magnet which is disposed on the other axial side from the stator, and fixed to an outer circumferential surface of the shaft; a bus bar unit disposed in the opening portion; a circuit board which is held by the bus bar unit; and a rotation sensor which is attached to the circuit board, and axially faces the sensor magnet, the bus bar unit having a bus bar which is electrically connected to the stator and a bus bar holder which holds the bus bar, the bus bar holder having a cylindrical holder main body portion which is disposed on a radially inner side of the opening portion, the pump portion including: an inner rotor which is attached to the shaft; an annular outer rotor which surrounds a radially outer side of the inner rotor; a pump body which accommodates the inner rotor and the outer rotor; and a pump cover which is attached to one axial side of the pump body, wherein the circuit board has a circuit board through-hole which axially penetrates the circuit board, and axially overlaps with the shaft, and an end portion on the other axial side of the shaft is provided with a connection portion which is connectable to another member.

Another embodiment of a pump device according to the present disclosure comprises: a motor portion having a shaft having its center on an axially extending center axis, a rotor which is fixed to the shaft, and a stator which is disposed on a radially outer side of the rotor; a pump portion which is disposed on one axial side of the motor portion, and driven by the motor portion; a cylindrical housing which holds the motor portion and the pump portion, and has an opening portion on the other axial side; and a motor cover which is attached to the other axial side of the housing, and covers the other axial side of the motor portion, the motor portion including: a sensor magnet which is disposed on the other axial side from the stator, and fixed to an outer circumferential surface of the shaft; a bus bar unit disposed in the opening portion; and a rotation sensor which is held by the bus bar unit, and axially faces the sensor magnet, the bus bar unit having a bus bar which is electrically connected to the stator and a bus bar holder which holds the bus bar, the bus bar holder having a cylindrical holder main body portion which is disposed on a radially inner side of the opening portion, the pump portion including: an inner rotor which is attached to the shaft; an annular outer rotor which surrounds a radially outer side of the inner rotor; a pump body which accommodates the inner rotor and the outer rotor; and a pump cover which is attached to one axial side of the pump body, wherein the pump body has a pump chamber which is recessed from a surface on one axial side toward the other axial side and accommodates the inner rotor and the outer rotor, and a through-hole through which the shaft axially penetrates the pump body, the pump cover has an inlet and an outlet which are in communication with the pump chamber, and an end portion on the other axial side of the shaft is provided with a connection portion which is connectable to another member.

### Brief Description of the Drawings

Embodiments will now be described, by way of example only, with reference to the accompanying drawings which are meant to be exemplary, not limiting, and wherein like elements are numbered alike in several Figures, in which:
FIG. 1 is a cross-sectional view of a pump device according to the first embodiment.
FIG. 2 is a cross-sectional view of a portion of the pump device according to the first embodiment.
FIG. 3 is a front view of the pump device according to the first embodiment.
FIG. 4 is a perspective view of the pump device according to the first embodiment.
FIG. 5 is a cross-sectional view of a portion of another example of a pump device according to the first embodiment.
FIG. 6 is a cross-sectional view of a portion of a pump device according to the second embodiment.
FIG. 7 is a cross-sectional view of a portion of the pump device according to the second embodiment.
FIG. 8 is a perspective view of a portion of the pump device according to the second embodiment.
FIG. 9 is a cross-sectional view of a portion of a pump device according to the third embodiment.

### Detailed Description of the Preferred Embodiments

Hereinafter, a pump device according to the preferred embodiments of the present disclosure will be explained with reference to the accompanying drawings. Further, the scope of the present disclosure is not limited to the following embodiments, but may be changed within the scope of the invention. Further, each structure illustrated in the following drawings may be different in its scale, the number of members thereof, etc., from those in an actual pump device or members, for better understanding of each component.

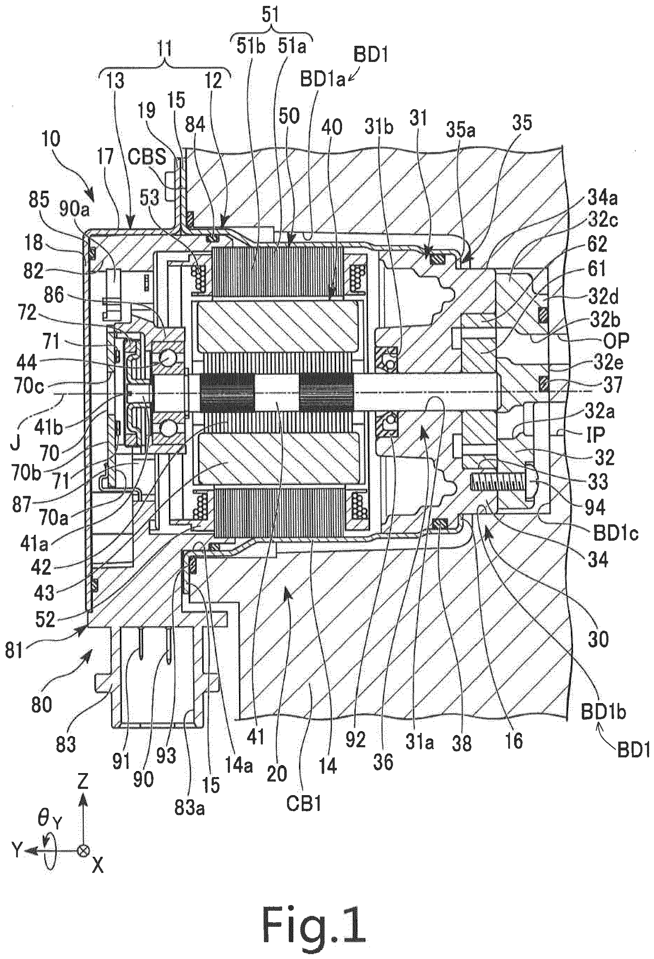

In the drawings, an X-Y-Z coordinate system is provided as a suitable three-dimensional orthogonal coordinate system. In the X-Y-Z coordinate system, a direction parallel to the axial direction of a center axis J shown in FIG. 1 is referred to as Y-axis direction. A vertical direction of FIG. 1, that is, a direction orthogonal to the Y-axis direction, is referred to as Z-axis direction. A direction orthogonal to both the Y-axis direction and the Z-axis direction is referred to as X-axis direction.

In the following description, a Z-axis direction that is orthogonal to a direction in which the center axis J extends is referred to as vertical direction. That is, a positive side (+Z side) of the Z-axis direction may be referred to as 'upper side,' and a negative side (-Z side) of the Z-axis may be referred to as 'lower side.' Further, it is to be understood that the descriptions of the vertical direction, the upper side and the lower side are used for explanation only, and they do not limit the actual positional relation or direction.

In the following description, a positive side (+Y side) of the Y-axis direction may be referred to as 'counter-output side (other axial side),' and a negative side (-Y side) of the Y-axis direction may be referred to as 'output side (one axial side).' Also, unless otherwise explained, a direction parallel to the center axis J (Y-axis direction) may be simply referred to as 'axial direction,' a radial direction having its center on the center axis J may be simply referred to as 'radial direction,' and a circumferential direction (θ_{Y} direction) having its center on the center axis J, that is, the axial circumference of center axis J, may be simply referred to as 'circumferential direction.'

Further, herein, descriptions such as being 'axially extended' do not only refer to a case of strictly being extended in the axial direction, but it may also include a case of being extended in a direction inclined at less than 45° relative to the axial direction. Also, descriptions such as being 'radially extended' do not only refer to a case of strictly being extended in the radial direction, that is, the direction perpendicular to the axial direction, but it may also include a case of being extended in a direction inclined at less than 45° relative to the radial direction.

### <First Embodiment>

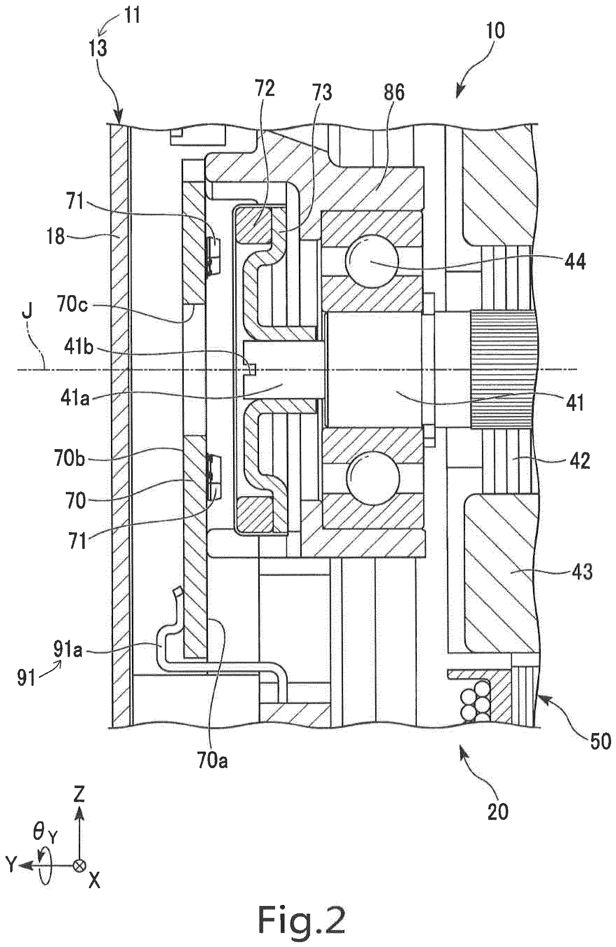

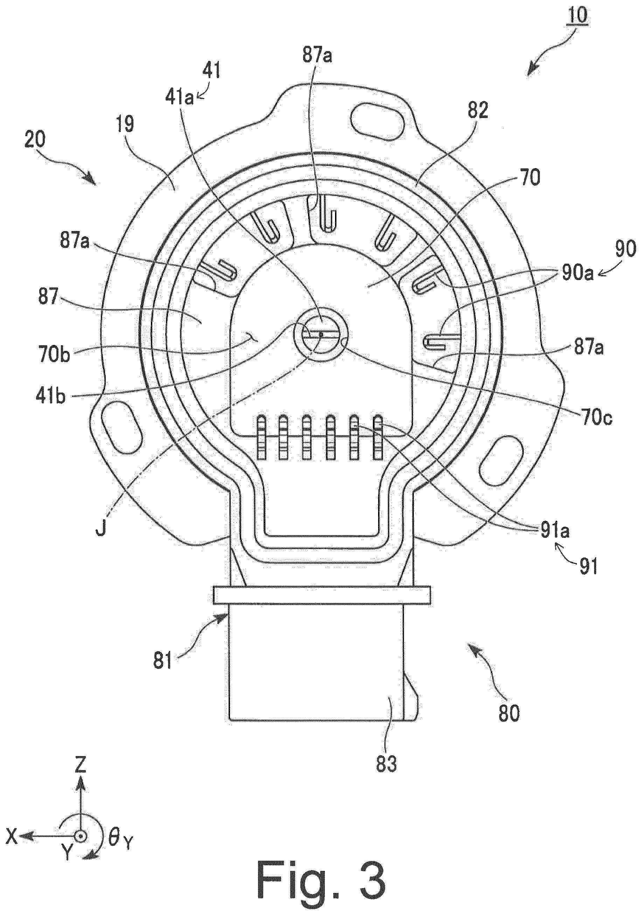

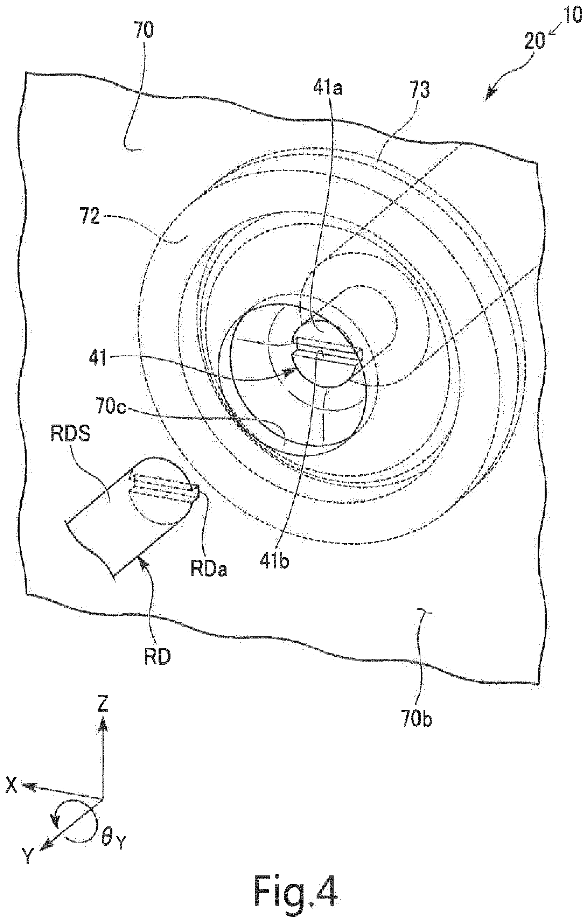

FIG. 1 is a cross-sectional view of a pump device 10 according to the first embodiment. FIG. 2 is a partially enlarged view of FIG. 1. FIG. 3 is a front view of the pump device 10. FIG. 4 is a perspective view of a portion of a motor portion 20. FIG. 4 shows a state before a motor cover 13 is attached. As shown in FIG. 1, the pump device 10 is, for example, fixed to a car body CB1. The car body CB1 is a component of a vehicle. The car body CB1 is not particularly limited, and therefore may be, for example, an automatic transmission.

The pump device 10 comprises a case 11, a motor portion 20 and a pump portion. The case 11 accommodates the motor portion 20 and the pump portion 30 therein. The case 11 has a housing 12 and a motor cover 13. That is, the pump device 10 further comprises the housing 12 and the motor cover 13.

In the following description, descriptions such as 'accommodating' a subject do not only refer to a case of strictly accommodating the entire subject, but it may also include a case of partially accommodating a portion of the subject. That is, for example, when it is described that the case 11 accommodates both the motor portion 20 and the pump portion 30, a portion of the motor portion 20 and a portion of the pump portion 30 may still be located outside the case 11.

The housing 12 has a cylindrical shape, and holds the motor portion 20 and the pump portion 30 therein. The housing 12 extends in the axial direction (Y-axis direction). The housing 12 is made of, for example, metal. The housing 12 is formed by, for example, press processing.

The housing 12 has a housing tube portion 14, a housing flange portion 15 and an extending portion 16. The housing tube portion 14 has a tubular shape and covers at least a radially outer side of a stator 50 which will be described in detail in a subsequent section. The housing tube portion 14 has, for example, a multi-stepped cylindrical shape having its center on the center axis J. The housing tube portion 14 is open on both axial sides (±Y sides). The housing tube portion 14 has an opening portion 14a on the counter-output side (+Y side). That is, the housing 12 has the opening portion 14a on the counter-output side. An inner diameter of the housing tube portion 14 gradually decreases from the counter-output side (+Y side) toward the output side (-Y side).

The housing flange portion 15 extends radially outward from an end portion of the counter-output side (+Y side) of the housing tube portion 14. The extending portion 16 extends radially inward from an end portion of the output side (-Y side) of the housing tube portion 14.

The motor cover 13 is attached on the counter-output side (+Y side) of the housing 12. The motor cover 13 has a cover tube portion 17, a lid portion 18 and a cover flange portion 19. The cover tube portion 17 has a tubular shape and covers a radially outer side of a bus bar unit 80 which will be described in detail in a subsequent section.

The lid portion 18 is connected to the counter-output side (+Y side) of the cover tube portion 17. The lid portion 18 has, for example, a planar shape. The lid portion 18 is disposed on the counter-output side from the bus bar unit 80. The lid portion 18 closes up an opening on the counter-output side of a holder main body portion 82 which will be described in detail in a subsequent section. The lid portion 18 covers the counter-output side of the motor portion 20. That is, the motor cover 13 covers the counter-output side of the motor portion 20.

The cover flange portion 19 extends radially outward from an end portion on the output side (-Y side) of the cover tube portion 17. A surface on the output side of the cover flange 19 is in contact with a surface on the counter-output side (+Y side) of the housing flange portion 15. The cover flange portion 19 and the housing flange portion 15 are axially (Y-axis direction) fixed by, for example, caulking. With this, the housing 12 and the motor cover 13 are fixed.

The motor portion 20 has a shaft 41, a counter-output side bearing 44, a rotor 40, the stator 50, the bus bar unit 80, a circuit board 70, a rotation sensor 71 and a sensor magnet 72.

The shaft 41 has its center on the center axis J which extends in the axial direction (Y-axis direction). An end portion on the output side (-Y side) of the shaft 41 extends to the pump unit 30. The shaft 41 is rotatably supported by the counter-output side bearing 44 and a bearing portion 36 of a pump body, which will be described in detail in a subsequent section, and rotates around the axis in the circumferential direction (±θ_{Y} direction). The shaft 41 is a single common shaft which is shared by the motor portion 20 and the pump portion 30.

As shown in FIG. 2, a groove portion 41b is provided to an end portion on the counter-output side (+Y side) of the shaft 41. The groove portion 4lb is recessed from an end portion on the counter-output side of the shaft 41 toward the output side (-Y side). As shown in FIG. 3, the groove portion 4lb extends in a direction orthogonal to the axial direction (Y-axis direction) (that is, in X-axis direction shown in FIG. 3). The groove portion 4lb passes through the center axis J and extends in the radial direction. In this embodiment, the groove portion 4lb penetrates the shaft 41 in a direction orthogonal to the axial direction.

In this embodiment, a small-diameter portion 41a having a smaller outer diameter than other portions of the shaft 41 is provided to an end portion on the counter-output side (+Y side) of the shaft 41. That is, in this embodiment, the groove 4lb is provided to an end portion on the counter-output side of the small-diameter portion 41a.

The groove portion 4lb is a connection portion through which a drive unit RD shown in FIG. 4 can be connected. The drive unit RD is connected to the shaft 41 through the groove portion 4lb and rotates the shaft 41.

As shown in FIG. 1, the counter-output side bearing 44 is disposed on the counter-output side (+Y side) from the stator 50. The counter-output bearing 44 is, for example, a ball-and-roller bearing. The counter-output side bearing 44 is held in a bus bar holder 81, which will be described in detail in a subsequent section, of the bus bar unit 80. A bearing other than the ball-and-roller type may be used as the counter-output side bearing 44.

The rotor 40 is fixed to the shaft 41. The rotor 40 has a rotor core 42 and a rotor magnet 43. In this embodiment, the rotor core has a cylindrical shape, and is formed by axially laminating a plurality of electromagnetic steel plates. The rotor core 42 surrounds the shaft 41 in the circumferential direction (θ_{Y} direction), and is fixed to the shaft 41. That is, the rotor 42 has a through-hole in which the shaft 41 is fixed to. The rotor magnet 43 is fixed to an outer surface of the rotor core 42 along the circumferential direction. The rotor core 42 and the rotor magnet 43 are integrated with the shaft 41 and rotate together. In this embodiment, the rotor magnet 43 has a cylindrical shape. The rotor magnet 43 may be configured with a plurality of magnets arranged on an outer surface of the rotor core 42. The rotor 40 may be substituted with other elements such as compressed powder core, or the like.

The stator 50 is disposed on a radially outer side of the rotor 40. The stator 50 has a stator core 51, an insulating member 52 and a coil 53. The stator core 51 has a core back portion 51a and a plurality of teeth portions 51b. In this embodiment, the stator core 51 is formed by axially laminating a plurality of electromagnetic steel plates. The stator 50 may be substituted with other elements such as compressed powder core, or the like.

The core back portion 51a has, for example, a cylindrical shape which is concentric with the shaft 41. The core back portion 51a is fixed to an inner circumferential surface of the housing tube portion 14. The plurality of teeth portions 51b extend from an inner surface of the core back portion 51a toward the shaft 41. The plurality of teeth portions 51b is arranged at equal intervals along the circumferential direction.

The insulating member 52 is provided to each of the teeth portions 51b. The coil 53 is provided to each of the teeth portions via the insulating member 52. The coil 53 is formed by winding up an electrically conductive wire.

The bus bar unit 80 is disposed on the counter-output side (+Y side) of the stator 50. The bus bar unit 80 is disposed at the opening portion 14a on the counter-output side (+Y side) of the housing tube portion 14. The bus bar unit 80 has the bus bar holder, a phase bus bar 90 and a sensor bus bar 91.

The bus bar holder 81 holds at least one phase bus bar 90 and at least one sensor bus bar 91. The bus bar holder 81 has a holder main body portion 82, a holder bottom 87, a bearing holding portion 86 and a connector portion 83. The holder main body portion 82 has a cylindrical shape. The holder main body portion 82 is, for example, concentric with the shaft 41. An end portion on the output side (-Y side) of the holder main body portion 82 is disposed on a radially inner side of the housing tube portion 14. That is, the holder boy portion 82 is disposed on a radially inner side of the opening portion 14a.

An O-ring 84 is disposed between the holder main body portion 82 and the housing tube portion 14, and covers the entire circumference of the gap therebetween in the circumferential direction. The O-ring 84 has a substantially annular shape. That is, in the motor portion 20, the O-ring 84 is disposed in a radial gap between the housing 12 and the holder main body portion 82.

An opening on the counter-output side (+Y side) of the holder main body portion 82 is closed up by the lid portion 18. An O-ring 85 is disposed between a surface on the counter-output side of the holder main body portion 82 and the lid portion 18. The O-ring 85 has a substantially annular shape. The O-ring 85 covers the entire circumference of the opening on the counter-output side of the holder main body portion 82 in the circumferential direction.

As shown in FIG. 3, the holder bottom 87 expands radially inward from an inner circumferential surface of the holder main body portion 82. As shown in FIG. 1, the holder bottom 87 connects the holder main body portion 82 and the bearing holding portion 86. As shown in FIG. 3, the holder bottom 87 has at least one bottom through-hole 87a which axially (in Y-axis direction) penetrates the holder bottom 87. In the example shown in FIG. 3, three bottom through-holes 87a are provided. The plurality of bottom through-holes 87a is aligned along the circumferential direction.

Although it is not explicitly illustrated in the drawings, a connection wiring, which connects the stator 50 and the phase bus bar 90, passes through the bottom through-holes 87a. As shown in FIG. 3, the bottom through-holes 87a extend in the circumferential direction. For this reason, it is possible to prevent the connection wiring from contacting an inner edge of the bottom through-holes 87a when the bus bar holder 81 is rotated in the circumferential direction. For this reason, it is possible to suppress the damages which may occur in the connection wiring when the bus bar holder 81 is rotated in the circumferential direction to adjust the relative position of the rotation sensor 71.

The bottom through-holes 87a axially (Y-axis direction) overlap with a coil connecting portion 90a, which will be described in detail in a subsequent section, of the phase bus bar 90. In the example shown in FIG. 3, one bottom through-hole 87a axially overlaps with two coil connecting portion 90a.

As shown in FIG. 1, the bearing holding portion 86 is provided on a radially inner side of the holder main body portion 82. The bearing holding portion 86 holds the counter-output side bearing 44. For this reason, it is possible to for the bus bar holder 81 to accurately rotate around the shaft 41 the circumferential direction (±θ_{Y} direction). With this, it is also easy to adjust the relative position of the rotation sensor 71 more accurately.

The connector portion 83 protrudes radially outward from the holder main body portion 82. In the example shown in FIG. 1, the connector portion 83 protrudes downward (-Z side) from the holder main body portion 82. The connector portion 83 has a connector concave portion 83a which is open toward the lower side and recessed toward the upper side. The connector portion 83 is connected to an outside power supply which is not illustrated in the drawings.

In this embodiment, a plurality of phase bus bars 90 is provided. For example, three phase bus bars 90 are provided. Each of the phase bus bars 90 has the coil connecting portion 90a. In this embodiment, for example, two coil connecting portions 90a are provided per phase bus bar 90. The coil connecting portion 90a protrudes from an inner surface of the holder main body portion 82.

Although it is not illustrated in the drawings, the coil connecting portion 90a is electrically connected to the coil 53 of the stator 50 through a connection wiring which connects the stator 50 and the phase bus bar 90. As a result, the phase bus bar 90 is electrically connected to the stator 50.

In this embodiment, a plurality of sensor bus bars 91 is provided. For example, six sensor bus bars 91 are provided. As shown in FIG. 2, each of the sensor bus bars 91 has a connecting terminal 91a. The connecting terminal 91a is fixed to a substrate surface 70b on the counter-output side of the circuit board 70. With this, the sensor bus bar 91 is electrically connected to the circuit board 70. As a result, the sensor bus bar 91 is electrically connected to the rotation sensor 71 via the circuit board 70.

As shown in FIG. 1, one end of the phase bus bar 90 and one end of the sensor bus bar 91 protrude downward (-Z side) from a bottom surface of the connector concave portion 83a.

The circuit board 70 is fixed to the holder main body portion 82. That is, the circuit board 70 is held by the bus bar unit 80. The circuit board 70 is accommodated on a radially inner side of the holder main body portion 82. In the example of FIG. 1, a substrate surface of the circuit bard 70 is, for example, orthogonal to the axial direction (Y-axis direction).

As shown in FIG. 2, the circuit board 70 has a circuit board through-hole 70c. The circuit board through-hole 70c axially (Y-axis direction) penetrates the circuit board 70. As shown in FIG. 2 to FIG. 4, the circuit board through-hole 70c axially overlaps with the shaft 41. The circuit board through-hole 70c axially overlaps with at least a portion of the groove portion 41b of the shaft 41. In this embodiment, the circuit board through-hole 70c axially overlaps with the entire small-diameter portion 41a of the shaft 41. In this embodiment, the circuit board through-hole 70c axially overlaps with the entire shaft 41.

As shown in FIG. 3, when seen in the axial direction (Y-axis direction), an opening edge of the circuit board through-hole 70c has a circular shape in which the center axis J passes through the center thereof. In this embodiment, an inner diameter of the circuit board through-hole 70c is bigger than an outer diameter of the shaft 41.

As shown in FIG. 2, the rotation sensor 71 is attached to the circuit board 70. In this embodiment, the rotation sensor 71 is attached to a substrate surface 70a on the output side, which is a surface on the output side (-Y side) of the circuit board 70. The rotation sensor 71 is, for example, a hall element. The rotation sensor 71 axially (Y-axis direction) faces the sensor magnet 72. There are, for example, three rotation sensors 71. The rotation sensors 71 are preferably arranged at equal intervals along the circumferential direction. Further, a sensor other than the hall element type may be used as the rotation sensor 71.

The sensor magnet 72 is fixed to an outer circumferential surface of the shaft 41. In this embodiment, the sensor magnet 72 is fixed to an outer circumferential surface of an end portion on the counter-output side (+Y side) of the shaft 41 via a mounting member 73. The mounting member 73 has an annular shape, and is fitted into the small-diameter portion 41a of the shaft 41.

The sensor magnet 72 has, for example, an annular shape. The sensor magnet 72 is fitted into the mounting member 73. The sensor magnet 72 is disposed on the counter-output side (+Y side) from the stator 50. Magnetic poles of the sensor magnet 72 are provided such that N-poles and S-poles are alternately arranged along the circumferential direction.

In this embodiment, the circuit board 70 is provided with the circuit board through-hole 70c which axially (Y-axis direction) overlaps with the shaft 41, and the groove portion 41b is provided to an end portion on the circuit board 70 side (+Y side) of the shaft 41. For this reason, prior to attaching the motor cover 13, a drive shaft RDS of the drive unit RD is configured to pass through the circuit board through-hole 70c, and a coupling projection portion RDa provided to a front end of the drive shaft RDS is fitted into the groove portion 41b, as shown in FIG. 4. The coupling projection portion RDa protrudes from a front end of the drive shaft RDS to the counter-output side (-Y side). The coupling projection portion RDa extends in a direction that is orthogonal to the axial direction (Y-axis direction).

With this, the drive shaft RDS is connected to the shaft 41. Accordingly, it is possible to rotate the shaft 41 in the circumferential direction (±θ_{Y} direction) by driving the drive unit RD. That is, in this embodiment, it is possible to rotate the shaft 41 after the motor portion 20 and the pump portion 20 have been assembled.

Further, herein, descriptions such as 'after the motor portion and the pump portion have been assembled' include the meaning of 'after at least a portion of the motor and at least a portion of the pump have been connected through the single shaft.' For example, herein, descriptions such as 'after the motor portion and the pump portion have been assembled' include the meaning of "before the motor cover 13 is attached to the housing 12.'

Here, the holder main body portion 82 has a cylindrical shape, and is disposed at the opening portion 14a of the cylindrical housing 12. For this reason, the holder main body portion 82 is rotatable in the circumferential direction relative to the housing 12, before the housing 12 and the motor cover 13 are attached. That is, the bus bar unit 80 is rotatable in the circumferential direction relative to the housing 12.

In order to adjust a relative position of the rotation sensor 71 to the sensor magnet 72, the bus bar unit 80 is moved little by little along the circumferential direction, and the shaft 41 is rotated at each position by using the drive unit RD as described above. An optimum position of the rotation sensor 71 is detected based on a change in magnetic flux of the sensor magnet detected by the rotation sensor 71.

As described above, in this embodiment, the shaft 41 is rotated to detect a magnetic flux of the sensor magnet 72 by using the rotation sensor 71 after the motor portion 20 and the pump portion 30 have been assembled, and thereby a relative position of the rotation sensor 71 to the sensor magnet 72 is adjusted. Thus, according to this embodiment, the pump device 10 has a single shaft 41 commonly shared by the motor portion 20 and the pump portion 30, and when assembling the pump device 10, it is possible to adjust a relative position of the rotation sensor 71 after the motor portion 20 and the pump portion 30 have been assembled.

The motor cover 13 is attached to the housing 12 after a relative position of the rotation sensor 71 has been adjusted. By attaching the motor cover 13 to the housing 12 a force directed toward the output side (that is, toward the -Y side) from the lid portion 18 is applied to the bus bar holder 81 via the O-ring 85. Accordingly, the bus bar holder 81 is axially (Y-axis direction) clamped between the housing 12 and the motor cover 13, and fixed to the case 11. Accordingly, when the housing 12 and the motor cover 13 are attached, the bus bar holder 81 does not rotate in the circumferential direction. As a result, it is possible for the rotation sensor 71 to maintain an optimum relative position.

In this embodiment, it is possible to adjust the relative position of the rotation sensor 71 just by conducting a simple additional process on the circuit board 70 and the shaft 41. With this, there is no need to complicate the structure of the pump device 10 or increase its size.

As described above, the groove portion 41b is a connection portion which connects the shaft 41 to the drive unit RD. Therefore, it is easy to make a connection portion by cutting out a front end of the shaft 41.

As described above, the groove portion 4lb groove portion 4lb radially extends through the center axis J. For this reason, when the drive unit RD is connected to the shaft 41, it is easy to align the center axis of the drive shaft of the derive unit and the center axis J of the shaft 41.

As described above, the drive unit RD is the another member connected to the shaft 41. For this reason, it is possible to rotate the shaft 41 by using the drive unit RD, and thereby adjust a relative position of the rotation sensor 71.

As described above, the O-ring 84 is disposed between the housing 12 and the holder main body portion 82 in the radial direction. For this reason, a frictional force is respectively generated between the O-ring 84 and an inner surface of the housing 12, and between O-ring 84 and an outer surface of the holder main body portion 82. With this, when adjusting a relative position of the rotation sensor 71, it is possible to prevent the circumferential position of the bus bar unit 80 from being shifted when the shaft 41 is rotated. Thus, according to this embodiment, it is easy to optimize a relative position of the rotation sensor 71 to the sensor magnet 72.

As shown in FIG. 1, the pump portion 30 is disposed on the output side (-Y side) of the motor portion 20. The pump portion 30 is driven by the motor portion 20. The pump portion 30 has a pump body 31, a pump cover 32, an inner rotor 61 and an outer rotor 62.

The pump body 31 is fixed on an inner surface of the housing tube portion 14. The pump body 31 is made of, for example, metal. The pump body 31 is formed by, for example, cutting work. The pump body 31 has a pump chamber 33, an oil seal holding portion 31b, a through-hole 31a, a bearing portion 36 and an exposure portion 34.

The pump chamber 33 is a concave portion which is recessed from a surface on the output side (-Y side) of the pump body 31 toward the counter-output side (+Y side). The pump chamber 33 accommodates the inner rotor 661 and the outer rotor 62 on an inner side thereof. That is, the pump body 31 accommodates the inner rotor 61 and the outer rotor 62. The output side (-Y side) of the pump chamber 33 is closed by the pump cover 32.

Although it is not illustrated in the drawings, when seen in the axial direction (Y-axis direction), an opening edge of the pump chamber 33 has, for example, a circular shape in which the center axis J passes through the center thereof.

The oil seal holding portion 31b is recessed from a surface on the counter-output side (+Y side) of the pump body 31 toward the output side (-Y side). The oil seal holding chamber 31b holds an oil seal 92. The oil seal 92 prevents oil that is introduced into the oil seal holding portion 31b from the pump chamber 33 via the through-hole 31a from advancing into the motor portion 20.

The through-hole 31a axially (Y-axis direction) penetrates the pump body 31. The shaft 41 passes through the through-hole 31a. An end portion on the counter-output side (+Y side) of the through-hole 31a is open toward the oil seal holding portion 31b. An end portion on the output side (-Y side) of the through-hole 31a is open toward the pump chamber 33. Although it is not illustrated in the drawings, when seen in the axial direction, an opening edge of the through-hole 31a has, for example, a circular shape that is concentric with the pump chamber 33.

The bearing portion 36 supports the shaft 41. In this embodiment, the bearing portion 36 is, for example, a plain bearing. In the example shown in FIG. 1, the bearing portion 36 is an inner wall portion of the through-hole 31a. Further, a bearing other than the plain bearing type may be used as the bearing portion 36.

The exposure portion 34 is disposed on the output side (-Y side) from the housing tube portion 14. The exposure portion 34 is exposed outside the housing 12. The exposure portion 34 has, for example, an axially extending (Y-axis direction) columnar shape. The exposure portion 34 has an outer circumferential surface 34a which surrounds a radially outer side of the center axis J. In this embodiment, the outer circumferential surface 34a is provided, for example, to surround the entire circumference of the exposure portion in the circumferential direction.

The pump body 31 has a stepped portion 35 where a radial dimension becomes smaller toward the output side (-Y side). A stepped surface 35a, which intersects with the axial direction (Y-axis direction) of the stepped portion 35, is in contact with the extending portion 16. More specifically, the stepped surface 35a is in contact with a surface on the counter-output side (+Y side) of the extending portion 16. With this, it is possible to determine the axial position of the pump body 31 relative to the housing 12.

A portion of the pump body 31 on the counter-output side (+Y side) from the stepped surface 35a us fixed inside the housing tube portion 14 by, for example, press fitting. A portion of the pump body 31 on the output side (-Y side) from the stepped surface 35a protrudes toward the output side from the housing tube portion 14.

An O-ring is disposed in a radial gap between the pump body 31 and the housing tube portion 14, and covers the entire circumference of the gap therebetween in the circumferential direction.

The inner rotor 61 is attached to the shaft 41. More specifically, the inner rotor 61 is fixed to an end portion on the output side (-Y side) of the shaft 41. The inner rotor 61 is accommodated inside the pump chamber 33. The inner rotor 61 rotates around the center axis J (±θ_{Y} direction) with the rotation of the shaft 41.

The outer rotor 62 has a ring shape, and surrounds a radially outer side of the inner rotor 61. The outer rotor 62 is accommodated inside the pump chamber 33. The outer rotor 62 and the inner rotor 61 are engaged with each other. For this reason, the outer rotor 62 rotates with the rotation of the inner rotor 61. A rotary axis of the outer rotor 62 is a different axis from the center axis J that is, for example, parallel with the center axis J.

The pump cover 32 is attached to the output side (-Y side) of the pump body 31. The pump cover 32 is fixed to, for example, a surface on the output side of the exposure portion 34 of the pump body 31, by a screw 94. The pump cover 32 covers the output side (-Y side) of the pump chamber 33. The pump cover 32 has a pump cover main body portion 32c and a protrusion portion 32d.

A surface on the counter-output side (+Y side) of the pump cover main body portion 32c is in contact with a surface on the output side (-Y side) of the pump body 31. The protrusion portion 32d protrudes from the pump cover main body portion 32c toward the output side.

The pump cover 32 has an inlet 32a and an outlet 32b. The inlet 32a and the outlet 32b axially (Y-axis direction) penetrate the pump cover 32. The inlet 32a and the outlet 32b are in communication with the pump chamber 33. In the example of FIG. 1, the inlet 32a is disposed on a lower side (-Z side) than the outlet 32b. The outlet 32b is disposed on the protrusion portion 32d. The outlet 32b is open toward a contact surface 32e, which is a surface on the output side (-Y side) of the protrusion portion 32d.

Next, a state in which the pump device 10 is attached to a car body CB1 will be explained. The car body CB1 has a pump device accommodation portion BD1, an in-port portion IP and an out-port portion OP. The pump device accommodation portion BD1 is a concave portion which is recessed from a car body surface CBS toward the output side (-Y side). The pump device accommodation portion BD1 accommodates the pump device 10. In this embodiment, a surface on a radially inner side of the pump device accommodation portion BD1 has a cylindrical shape. The pump device accommodation portion BD1 has an accommodation main body portion BD1a and a fitting portion BD1b.

The accommodation main body portion BD1a is where a portion of the motor portion 20 is disposed on a radially inner side. The accommodation main body portion BD1a is open toward the car body surface CBS. The fitting portion BD1b is disposed on the output side (-Y side) of the accommodation main body portion BD1a. An outer diameter of the fitting portion BD1b is smaller than an inner diameter of the accommodation main body portion BD1a. The fitting portion BD1b is fitted with the exposure portion 34.

The in-port portion IP and the out-port portion OP are open toward a bottom surface of the pump device accommodation portion BD1. That is, the in-port portion IP and the out-port portion OP are open toward an accommodation portion bottom surface BD1c, which is a bottom surface of the fitting portion BD1b. The pump device 10 inhales fluid from the in-port portion IP, and discharges the fluid through the out-port portion OP. The fluid that is sent out by the pump device 10 is not limited to a particular type, for example, oil may be used. In the following descriptions, the fluid sent out by the pump device 10 will be considered as oil.

In this embodiment, the housing flange portion 15 axially (Y-axis direction) overlap with the cover flange portion 19, and the pump device 10 is coupled to the car body CB1 by a screw, via the housing flange portion 15 and the cover flange portion 19. That is, the pump device 10 is fixed to the car body CB1 via the housing flange portion 15. A surface on the output side (-Y side) of the housing flange portion 15 is in contact with the car body surface CBS.

An O-ring 93 is disposed between the housing flange portion 15 and the car body surface CBS. The O-ring covers the entire circumference of a gap between the housing flange portion 15 and the car body surface CBS in the circumferential direction.

A portion of the pump device 10 on the output side (-Y side) from the housing flange portion 15 is inserted into the pump device accommodation portion BD1. An end portion on the output side of the pump device 10 is in contact with the accommodation portion bottom surface BD1c. That is, an end portion on the output side of the pump cover 32 is in contact with the accommodation portion bottom surface BD1c. In this embodiment, an end portion on the output side of the pump cover 32 is the contact surface 32e of the protrusion portion 32d. The pump cover 32 is inserted into the fitting portion BD1b. The pump cover 32 is provided on a radially inner side, spaced apart from an inner surface of the fitting portion BD1b.

The in-port portion IP is connected to the inlet 32a of the pump cover 32. Accordingly, oil is introduced into the pump chamber 33 from the in-port portion IP via the inlet 32a. The out-port portion OP is connected to the outlet 32b of the pump cover 32. Accordingly, the oil introduced into the pump chamber 33 is discharged from the out-port portion OP via the outlet 32b.

In the pump cover 32, an O-ring 37 is disposed between the contact surface 32e of the protrusion portion 32d and the accommodation portion bottom surface BD1c. The O-ring 37 surrounds the outlet 32b and the out-port portion OP in the circumferential direction. Accordingly, it is possible to prevent the oil introduced into the pump device 10 from the in-port portion IP from flowing into the out-port portion OP via the contact surface 32e and the accommodation portion bottom surface BD1c.

The exposure portion 34 is fitted with the fitting portion BD1b of the pump accommodation portion BD1. In this embodiment, the exposure portion 34 is, for example, clearance-fitted into the fitting portion BD1b.

When the motor 20 is driven and rotates the shaft 41, the inner rotor 61, which is fixed to the shaft 41, also rotates. The outer rotor 62 rotates with the rotation of the inner rotor 61. With the rotation of the inner rotor 61 and the outer rotor 62, oil is introduced into the pump chamber 33 from the in-port portion IP via the inlet 32a. The oil that is introduced into the pump chamber 33 moves around inside the pump chamber 33 along with the rotation of the inner rotor 61 and the outer rotor 62, and is discharged to an outer side of the pump device 10 from the out-port portion OP via the outlet 32b. With this mechanism, the pump portion 30 is driven by the motor portion 20, and the pump device 10 sends out the oil from the in-port portion IP to the out-port portion OP.

Further, it is to be understood that this embodiment is not limited to the configurations described above, and may employ, for example, the configurations described below. In the following description, similar features from the previous description will be described with identical reference numbers, and they will not be explained in further detail.

While it has been described that the groove portion 41b extends in a direction that is orthogonal to the axial direction (Y-axis), the extending direction or the position of the groove portion 4lb is not limited in particular. For example, the groove portion 4lb may not pass through the center axis J, and it may not penetrate the shaft 41 in a direction that is orthogonal to the axial direction.

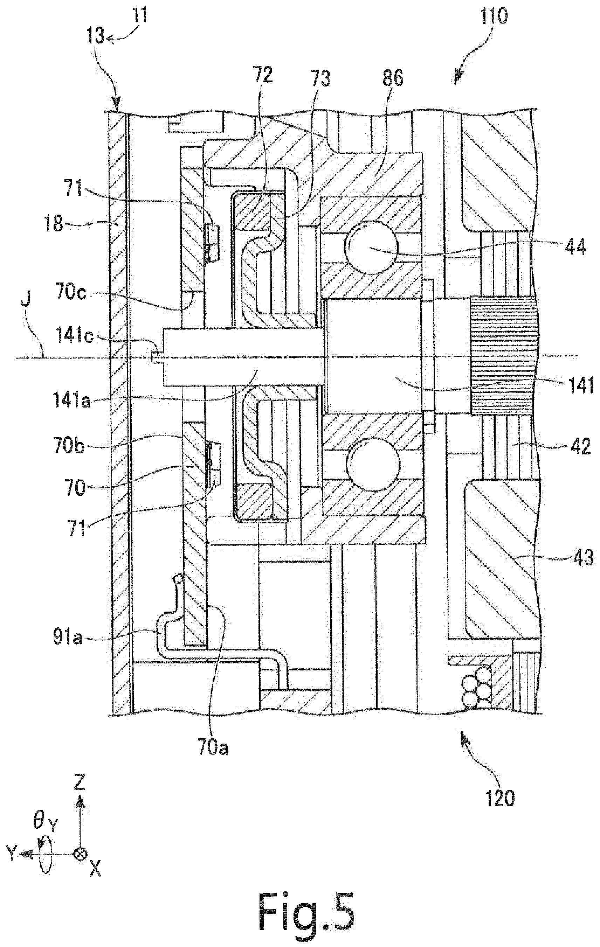

Also, while it has been described that the groove portion 41b is a connection portion provided to the shaft 41, a connection portion is not necessarily limited to a particular type as long as it is capable of connecting another member. For example, the configuration shown in FIG. 5 may be employed as a connection portion.

FIG. 5 is a cross-sectional view of a portion of another example of a pump device 110 according to this embodiment. As shown in FIG. 5, the pump device 110 is provided with a motor portion 120. The motor portion 120 has a shaft 141. Instead of the groove portion 41b, a convex portion 141c is provided to an end portion on the counter-output side (+Y side) of the shaft 141. The convex portion 141c is connectable to, for example, the drive unit RD. That is, in this configuration, the convex portion 141c functions as a connection portion.

The convex portion 141c protrudes from an end portion on the counter-output side (+Y side) of the shaft 141 toward the counter-output side. Although it is not illustrated in the drawings, the convex portion 141c extends in a direction that is orthogonal to the axial direction (Y-axis direction) (that is, in X-axis direction shown in FIG. 5). The convex portion 141c, for example, radially extends through the center axis J. The convex portion 141c has the same shape as, for example, the drive shaft of the drive unit RD shown in FIG. 4.

With this structure, the drive unit RD is connected to the shaft 141 via the convex portion 141c, and adjustment of a relative position of the rotation sensor 71 is performed in the same manner as the previously described structure. Further, in this configuration, a front end of the drive shaft RDS of the drive unit RD is provided with, for example, a groove that can be fitted with the convex portion 141c.

The shaft 141 has a small diameter portion 141a having a smaller outer diameter than other portions of the shaft 41 on the counter-output side (+Y side) of the shaft 141. That is, the convex portion 141c is provided on an end portion on the counter-output side of the small-diameter portion 141a.

The small-diameter portion 141a protrudes toward the counter-output side (+Y side) from the circuit board 70, via the circuit board through-hole 70c. That is, the shaft 141 passes through the circuit board through-hole 70c. An end portion on the counter-output side of the shaft 141 is disposed on the counter-output side from the circuit board 70. Accordingly, the convex portion 141c, which is a connection portion, is disposed on the counter-output side from the circuit board 70.

For this reason, there is no need for the drive shaft RDS of the drive unit RD to pass through the circuit board through-hole 70c when connecting the drive unit RD to the convex portion 141c. With this, it is easy to connect the drive unit RD to the shaft 141 via the convex portion 141c. As a result, with this configuration, it is easy to adjust a relative position of the rotation sensor 71.

Further, a plurality of connection portions may be provided rather than just one connection portion. For example, both the groove portion 41b shown in FIG. 2 and the convex portion 141c shown in FIG. 5 may be provided to an end portion on the counter-output portion (+Y side) of the shaft 41, or either a plurality of groove portions 4lb or a plurality of convex portions 141c may be provided thereto.

A shape of the circuit board through-hole 70c is not limited to a particular shape, and may be appropriately altered.

The O-ring 84 may be disposed in a radial gap between the housing 12 and the holder main body portion 82.

The another member that is connected to the connection portion may be a member other than the drive unit RD.

### <Second Embodiment>

In the second embodiment of the present disclosure, a connection portion is provided at a different location when compared with the first embodiment. In the following description, similar features from the first embodiment will be described with identical reference numbers, and they will not be explained in further detail.

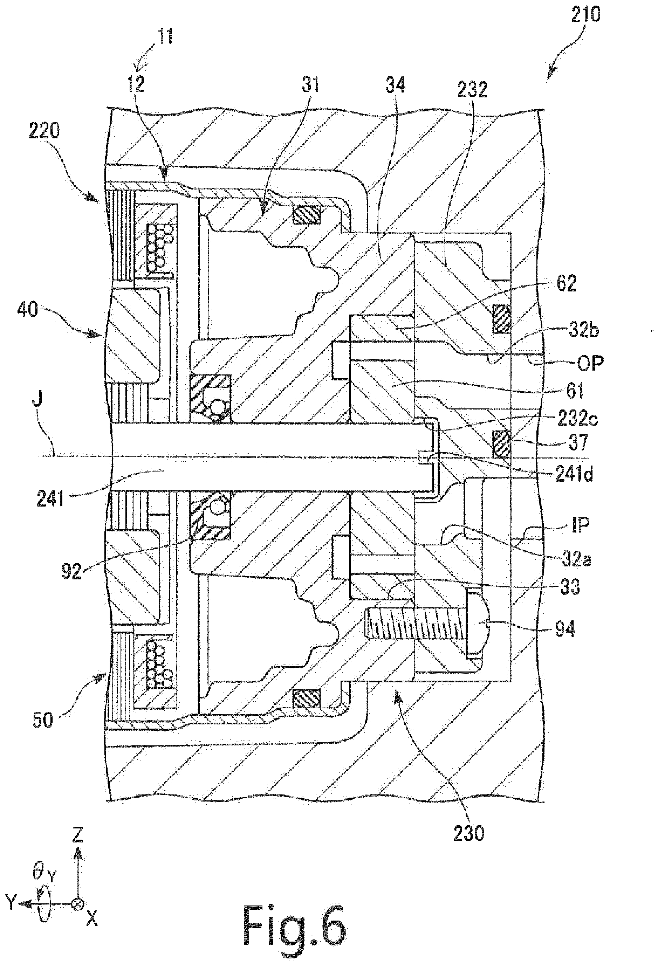

FIG. 6 is a cross-sectional view of a portion of a pump device 210 according to this embodiment. The pump device 210 comprises a case 11, a motor portion 220 and a pump portion 230. The motor portion 220 has a shaft 241, a rotor 40 and a stator 50. The pump portion 230 has a pump body 31, a pump cover 232, an inner rotor 61 and an outer rotor 62.

An end portion on the output side (-Y side) of the shaft 241 is disposed on the output side from the inner rotor 61. A groove portion 241d connectable to a drive unit RD is provided to the end portion on the output side of the shaft 241. Detailed configuration of the groove portion 241d is identical to the groove portion 41b of the first embodiment; except for the location it is provided.

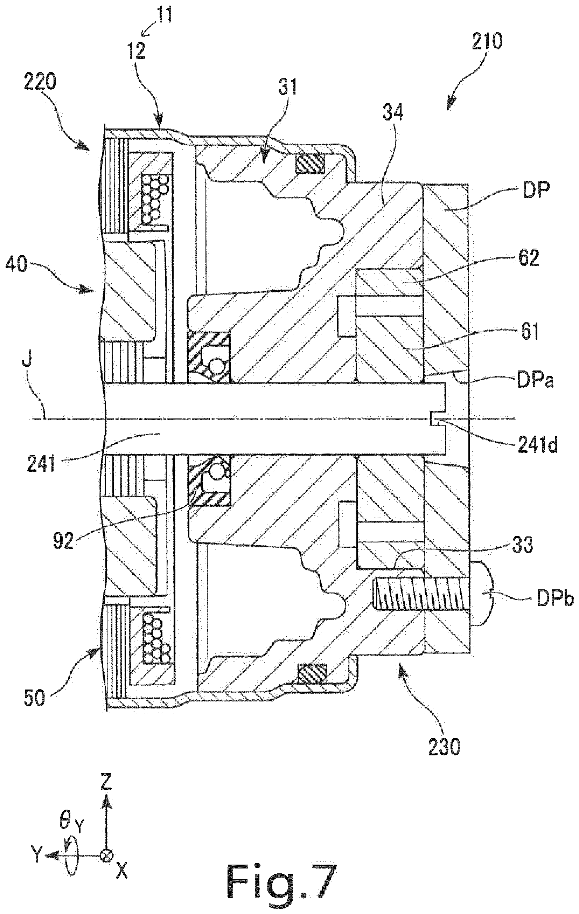

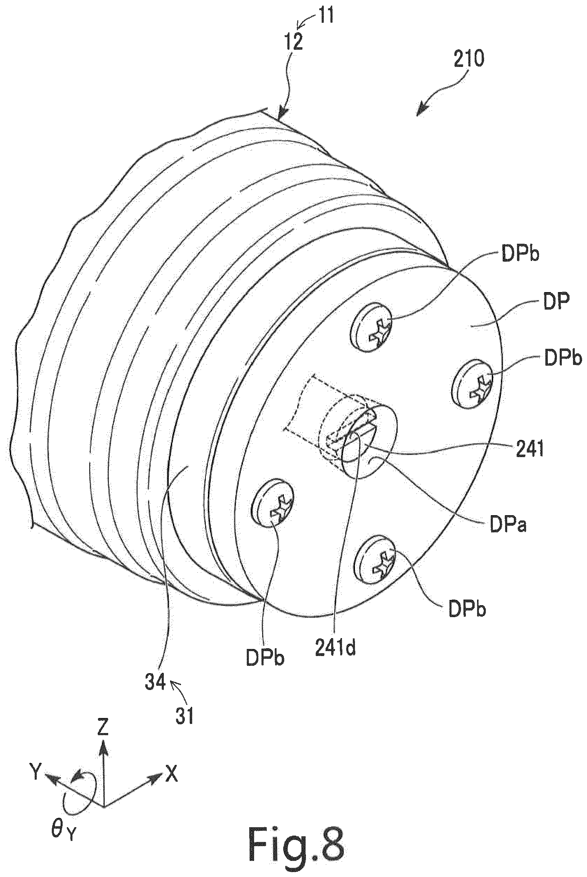

Therefore, as shown in FIG. 7 and FIG. 8, by attaching a dummy cover DP instead of the pump cover 232, the shaft 241 is rotated by the drive unit RD.

FIG. 7 is a cross-sectional view of a portion of the pump device 210 according to this embodiment. FIG. 8 is a perspective view of a portion of the pump device 210 according to this embodiment. In FIG. 7 and FIG. 8, the dummy cover DP is attached to the output side (-Y side) of the pump body 31 instead of the pump cover 232.

As shown in FIG. 7 and FIG. 8, the dummy cover DP is a disc-shaped member. The dummy cover DP is fixed to the pump body 31 by a screw DPb. Here, a screw hole on the pump body 31, with which the screw DPb is securely fastened, is preferably the same screw hole shown in FIG. 6 with which a screw 94 for fixing the pump cover 232 to the pump body 31 is securely fastened. With this, there is no need to provide a separate screw hole on the pump body 31 for attaching the dummy cover DP, and the dummy cover DP is conveniently attached to the pump body 31. As shown in FIG. 8, the dummy cover DP is fixed to the pump body 31 with, for example, four screws DPb.

As shown in FIG. 7 and FIG. 8, a dummy cover through-hole DPa is provided at the center of the dummy cover DP. The dummy cover through-hole DPa axially (Y-axis direction) penetrates the dummy cover DP. With this, the drive shaft RDS of the drive unit RD is inserted into the dummy cover through-hole DPa, and thereby the drive shaft RDS shown in FIG. 4 is connected to the groove portion 241d of the shaft 241. Therefore, according to this embodiment, it is possible to adjust a relative position of the rotation sensor 71 after the motor portion 220 and the pump portion 230 have been assembled.

As shown in FIG. 7, the dummy cover DP supports the inner rotor 61 and the outer rotor 62 from the output side (-Y side). Therefore, it is possible to prevent the shaft 241, which is press-fitted in to the inner rotor 61, from moving in the axial direction (Y-axis direction) when the shaft 241 is rotated by the drive unit RD. With this, it is easy to adjust a relative position of the rotation sensor 71.

An inner diameter of the dummy cover through-hole DPa preferably increases from the counter-output side (+Y side) toward the output side (-Y side). For this reason, it is easy to insert the drive shaft RDS into the dummy cover through-hole DPa, and thereby it is easy to connect the drive unit RD to the shaft 241.

As shown in FIG. 6, an accommodating concave portion 232c, which is recessed toward the output side (-Y side), is provided to a surface on the counter-output side (+Y side) of the pump cover 232. The accommodating concave portion 232c accommodates an end portion on the output side (-Y side) of the shaft 241. Accordingly, the shaft 241 protrudes toward the output side from the inner rotor 61.

With this structure, when the dummy cover DP is attached instead of the pump cover 232 as shown in FIG. 7, an end portion on the output side (-Y side) of the shaft 241 is inserted into the dummy cover through-hole DPa. Therefore, it is easier to connect the drive shaft RDS of the drive unit RD to the shaft 241.

In this embodiment, a circuit board through-hole 70c may or may not be provided on the circuit board 70. A connection portion such as the groove portion 41b or the convex portion 141c, or the like, may or may not be provided to an end portion on the counter-output side (+Y side) of the shaft 241. Other elements of the pump device 210 are not described in further detail as they are identical to those of the pump device 10 described in the first embodiment.

Further, it is to be understood that this embodiment is not limited to the configurations described above, and may employ the configurations described below.

The circuit board 70 may not be provided in the pump device 10. In such case, the rotation sensor 71 is preferably held directly by the bus bar holder 81.

The dummy cover DP may not be used when adjusting a relative position of the rotation sensor 71. In such case, the shaft 241 is rotated by applying a force directed toward the counter-output side (that is, toward the +Y side) to the shaft 241 by the drive unit RD that is connected to the shaft 241. Therefore, it is possible to prevent the shaft 241 from moving in the axial direction (Y-axis direction).

### <Third Embodiment>

In the third embodiment of the present disclosure, a difference from the second embodiment is that an inlet 332a of the pump cover 332 axially overlaps with the shaft 241. In the following description, similar features from the second embodiment will be described with identical reference numbers, and they will not be explained in further detail.

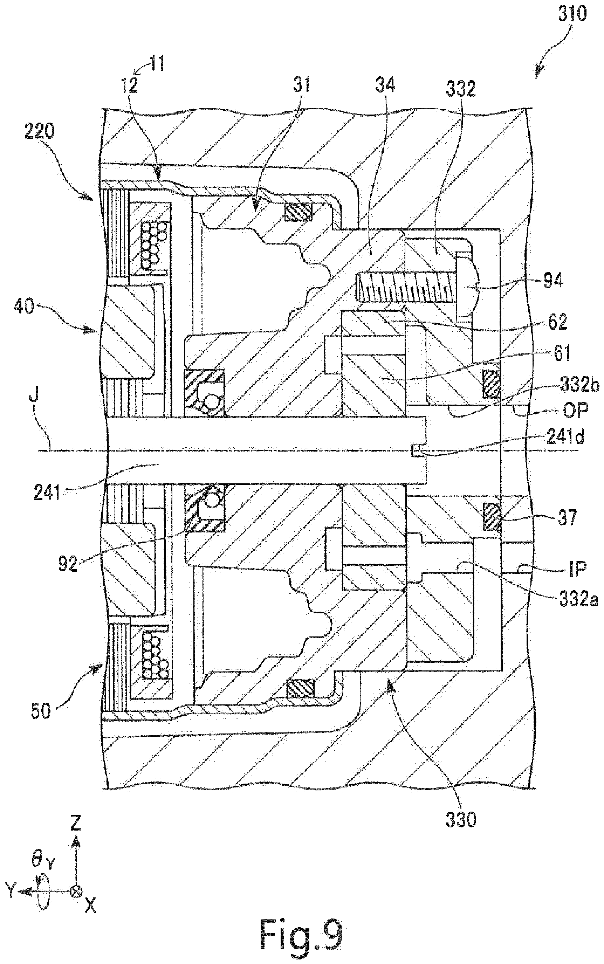

FIG. 9 is a cross-sectional view of a portion of a pump device 310 according to the third embodiment. The pump device 310 comprises a case 11, a motor portion 220 and a pump portion 330. The pump portion 330 has a pump body 31, a pump cover 332, an inner rotor 61 and an outer rotor 62.

The pump cover 332 has an inlet 332a and an outlet 332b. The inlet 332a is identical to the inlet 32a described in the first embodiment.

The outlet 332b axially (Y-axis direction) penetrates the pump cover 332. The outlet 332b axially overlaps with the shaft 241. With this, the drive unit RD is connected to the shaft 241 via the outlet 332b. Accordingly, it is possible to adjust a relative position of the rotation sensor 71 after the motor portion 220 and the pump portion 330 have been assembled, without using the dummy cover DP.

Although it is not illustrated in the drawings, when seen in the axial direction (Y-axis direction), an opening edge of the outlet 332b has, for example, a circular shape. An inner diameter of the outlet 332b is bigger than an outer diameter of the shaft 241. An end portion on the output side (-Y side) of the shaft 241 is disposed inside the outlet 332b. Therefore, it is easy to connect the drive shaft RDS with the shaft 241 by inserting the drive shaft RDS into the outlet 332b. Other elements of the outlet 332b are identical to those of the outlet 32b described in the first embodiment. Other elements of the pump device 310 are identical to those of the pump device 210 described in the second embodiment.

A method of mounting the pump device of the preferred embodiments to a car body is not limited to the method of attachment described in the embodiments. The pump device of the preferred embodiments may be attached to the car body and used in a state where the exposure portion is not fitted with the fitting portion of the car body. Further, the pump device of the preferred embodiments of the present disclosure does not necessarily need to be attached to the car body.

Each configuration described in the first embodiment to the third embodiment may be appropriately combined also as contradiction does not occur.

While preferred embodiments of the present disclosure have been described above, it is to be understood that variations and modifications will be apparent to those skilled in the art without departing from the scope of the present invention. The scope of the present disclosure, therefore, is to be determined solely by the following claims.

While the description above refers to particular embodiments of the present disclosure, it will be understood that many modifications may be made without departing from the scope of the claims. The accompanying claims are intended to cover such modifications so that they would fall within the scope of the present claims.

The presently disclosed embodiments are therefore to be considered in all respects as illustrative and not restrictive, the scope of the disclosure being indicated by the appended claims, rather than the foregoing description, and all changes which come within the meaning and range of equivalency of the claims are therefore intended to be embraced therein.

## Claims

1. A pump device (10, 110, 210, 310), comprising:
a motor portion (20, 120, 220) having a shaft (41, 141, 241) having its center on an axially extending center axis (J), a rotor (40) which is fixed to the shaft (41, 141, 241), and a stator (50) which is disposed on a radially outer side of the rotor (40) ;
a pump portion (30, 230, 330) which is disposed on one axial side of the motor portion (20, 120, 220), and driven by the motor portion (20, 120, 220);
a cylindrical housing (12) which holds the motor portion (20, 120, 220) and the pump portion (30, 230, 330), and has an opening portion on the other axial side; and
a motor cover (13) which is attached to the other axial side of the housing (12), and covers the other axial side of the motor portion (20, 120, 220), the motor portion (20, 120, 220) including:
a sensor magnet (72) which is disposed on the other axial side from the stator (50), and fixed to an outer circumferential surface of the shaft (41, 141, 241);
a bus bar unit (80) disposed in the opening portion;
a circuit board (70) which is held by the bus bar unit (80); and
a rotation sensor (71) which is attached to the circuit board (70), and axially faces the sensor magnet (72),
the bus bar unit (80) having a bus bar (91) which is electrically connected to the rotation sensor (71) and a bus bar holder (81) which holds the bus bar (91),
the bus bar holder (81) having a cylindrical holder main body portion (82) which is disposed on a radially inner side of the opening portion,
the pump portion (30, 230, 330) including:
an inner rotor (61) which is attached to the shaft (41, 141, 241);
an annular outer rotor (62) which surrounds a radially outer side of the inner rotor (61);
a pump body (31) which accommodates the inner rotor (61) and the outer rotor (62); and
a pump cover (32, 232, 332) which is attached to one axial side of the pump body (31),
wherein the circuit board (70) has a circuit board through-hole (70c) which axially penetrates the circuit board (70), and the center axis (J) of the shaft (41, 141, 241) passes through the center of said through-hole (70c), and
an end portion on the other axial side of the shaft (41, 141) is provided with a connection portion (41b, 141c) which is connectable to another member.

2. The pump device (10, 110, 210, 310) according to Claim 1,
wherein the connection portion (41b, 241d, 141c) is a groove portion (41b, 241d) which is recessed from the end portion on the other axial side of the shaft (41, 141, 241) toward the one axial side, and extends in a direction that is orthogonal to an axial direction.

3. The pump device (10, 110, 210, 310) according to Claim 1,
wherein the connection portion (41b, 241d, 141c) is a convex portion (141c) which protrudes from the end portion on the other axial side of the shaft (41, 141, 241) toward the other axial side, and extends in a direction that is orthogonal to the axial direction.

4. The pump device (10, 110, 210, 310) according to Claim 2 or 3,
wherein the connection portion (41b, 241d, 141c) extends
in the radial direction through the center axis (J).

5. The pump device (10, 110, 210, 310) according to any one of Claims 1 to 4,
wherein the another member is a drive unit (RD) which rotates the shaft (41, 141, 241).

6. The pump device (10, 110, 210, 310) according to any one of Claims 1 to 5,
wherein the shaft (41, 141, 241) passes through the circuit board through-hole (70c), and the end portion on the other axial side of the shaft (41,141,241) is disposed on the other axial side from the circuit board (70).

7. The pump device (10, 110, 210, 310) according to any one of Claims 1 to 6,
wherein the motor portion (20, 120, 220) has an O-ring (84) which disposed in a radial gap between the housing (12) and the holder main body portion (82).

8. A pump device (10, 110, 210, 310), comprising:
a motor portion (20,120,220) having a shaft (41, 141, 241) having its center on an axially extending center axis (J), a rotor (40) which is fixed to the shaft (41, 141, 241), and a stator (50) which is disposed on a radially outer side of the rotor (40);
a pump portion (30, 230, 330) which is disposed on one axial side of the motor portion (20, 120, 220), and driven by the motor portion (20, 120, 220);
a cylindrical housing (12) which holds the motor portion (20,120,220) and the pump portion (30, 230, 330), and has an opening portion on the other axial side;
a motor cover (13) which is attached to the other axial side of the housing (12), and covers the other axial side of the motor portion (20, 120, 220),
the motor portion (20, 120, 220) including:
a sensor magnet (72) which is disposed on the other axial side from the stator (50), and fixed to an outer circumferential surface of the shaft (41, 141, 241);
a bus bar unit (80) disposed in the opening portion; and
a rotation sensor (71) which is held by the bus bar unit (80), and axially faces the sensor magnet (72),
the bus bar unit (80) having a bus bar (91) which is electrically connected to the rotation sensor (71) and a bus bar holder (81) which holds the bus bar (91),
the bus bar holder (81) having a cylindrical holder main body portion (82) which is disposed on a radially inner side of the opening portion,
the pump portion (30, 230, 330) including:
an inner rotor (61) which is attached to the shaft (41, 141, 241);
an annular outer rotor (62) which surrounds a radially outer side of the inner rotor (61);
a pump body (31) which accommodates the inner rotor (61) and the outer rotor (62); and
a pump cover (32, 232, 332) which is attached to one axial side of the pump body (31),
wherein the pump body (31) has a pump chamber (33) which is recessed from a surface on one axial side toward the other axial side and accommodates the inner rotor (61) and the outer rotor (62), and a through-hole (31a) through which the shaft (41, 141, 241) axially penetrates the pump body (31),
the pump cover (32, 232, 332) has an inlet (32a, 332a) and an outlet (32b, 332b) which are in communication with the pump chamber (33), and
an end portion on the one axial side of the shaft (241) is provided with a connection portion (241d), which is connectable to another member.

9. The pump device (10, 110, 210, 310) according to Claim 8, wherein the end portion on one axial side of the shaft (241) is disposed on one axial side from the inner rotor (61), and
an accommodating concave portion (232c) is provided to a surface on the other axial side of the pump cover (32, 232, 332), which is recessed toward one axial direction, and accommodates the end portion on one axial side of the shaft (241).

10. The pump device (10, 110, 210, 310) according to Claim 8, wherein the outlet (32b, 332b) axially penetrates the pump cover (32, 232, 332), and axially overlaps with the shaft (241).

11. The pump device (10, 110, 210, 310) according to Claim 10, wherein the end portion on one axial side of the shaft (241) is disposed inside the outlet (32b, 332b).

## Patentansprüche

1. Eine Pumpenvorrichtung (10, 110, 210, 310), die folgende Merkmale aufweist:
einen Motorabschnitt (20, 120, 220) mit einer Welle (41, 141, 241), deren Mitte sich an einer sich axial erstreckenden Mittelachse (J) befindet, einem Rotor (40), der an der Welle (41, 141, 241) fixiert ist, und einem Stator (50), der an einer radial äußeren Seite des Rotors (40) angeordnet ist;
einen Pumpenabschnitt (30, 230, 330), der an einer Axialseite des Motorabschnitts (20, 120, 220) angeordnet ist und durch den Motorabschnitt (20, 120, 220) angetrieben wird;
ein zylindrisches Gehäuse (12), das den Motorabschnitt (20, 120, 220) und den Pumpenabschnitt (30, 230, 330) hält und einen Öffnungsabschnitt an der anderen Axialseite aufweist; und
eine Motorabdeckung (13), die an der anderen Axialseite des Gehäuses (12) angebracht ist und die andere Axialseite des Motorabschnitts (20, 120, 220) bedeckt,
wobei der Motorabschnitt (20, 120, 220) folgende Merkmale aufweist:
einen Sensormagneten (72), der an der anderen Axialseite von dem Stator (50) angeordnet ist und an einer Außenumfangsoberfläche der Welle (41, 141, 241) fixiert ist;
eine Sammelschieneneinheit (80), die in dem Öffnungsabschnitt angeordnet ist;
eine Schaltungsplatine (70), die durch die Sammelschieneneinheit (80) gehalten wird; und
einen Rotationssensor (71), der an der Schaltungsplatine (70) befestigt ist und dem Sensormagneten (72) axial zugewandt ist,
wobei die Sammelschieneneinheit (80) eine Sammelschiene (91), die elektrisch mit dem Rotationssensor (71) verbunden ist, und eine Sammelschienenhalterung (81) aufweist, die die Sammelschiene (91) hält,
wobei die Sammelschienenhalterung (81) einen zylindrischen Halterungshauptkörperabschnitt (82) aufweist, der an einer radial inneren Seite des Öffnungsabschnitts angeordnet ist,
wobei der Pumpenabschnitt (30, 230, 330) folgende Merkmale aufweist:
einen Innenrotor (61), der an der Welle (41, 141, 241) angebracht ist;
einen ringförmigen Außenrotor (62), der eine radial äußere Seite des Innenrotors (61) umgibt;
einen Pumpenkörper (31), der den Innenrotor (61) und den Außenrotor (62) unterbringt; und
eine Pumpenabdeckung (32, 232, 332), die an einer Axialseite des Pumpenkörpers (31) angebracht ist,
wobei die Schaltungsplatine (70) ein Schaltungsplatinen-Durchgangsloch (70c) aufweist, das die Schaltungsplatine (70) axial durchdringt, und die Mittelachse (J) der Welle (41, 141, 241) durch die Mitte des Durchgangslochs (70c) verläuft und
ein Endabschnitt an der anderen Axialseite der Welle (41, 141, 241) mit einem Verbindungsabschnitt (41b, 141c) versehen ist, der mit einem anderen Bauteil verbindbar ist.

2. Die Pumpenvorrichtung (10, 110, 210, 310) gemäß Anspruch 1,
bei der der Verbindungsabschnitt (41b, 241d, 141c) ein Rillenabschnitt (41b, 241d) ist, der von dem Endabschnitt an der anderen Axialseite der Welle (41, 141, 241) in Richtung der einen Axialseite zurückgesetzt ist, und sich in einer Richtung erstreckt, die orthogonal zu einer Axialrichtung ist.

3. Die Pumpenvorrichtung (10, 110, 210, 310) gemäß Anspruch 1,
bei der der Verbindungsabschnitt (41b, 241d, 141c) ein konvexer Abschnitt (141c) ist, der von dem Endabschnitt an der anderen Axialseite der Welle (41, 141, 241) in Richtung der anderen Axialseite vorsteht, und sich in einer Richtung erstreckt, die orthogonal zu der Axialrichtung ist.

4. Die Pumpenvorrichtung (10, 110, 210, 310) gemäß Anspruch 2 oder 3,
bei der der Verbindungsabschnitt (41b, 241d, 141c) sich in der Radialrichtung durch die Mittelachse (J) hindurch erstreckt.

5. Die Pumpenvorrichtung (10, 110, 210, 310) gemäß einem der Ansprüche 1 bis 4,
bei der das andere Bauteil eine Antriebseinheit (RD) ist, die die Welle (41, 141, 241) dreht.

6. Die Pumpenvorrichtung (10, 110, 210, 310) gemäß einem der Ansprüche 1 bis 5,
bei der die Welle (41, 141, 241) durch das Schaltungsplatinen-Durchgangsloch (70c) verläuft und der Endabschnitt an der anderen Axialseite der Welle (41, 141, 241) an der anderen Axialseite von der Schaltungsplatine (70) angeordnet ist.

7. Die Pumpenvorrichtung (10, 110, 210, 310) gemäß einem der Ansprüche 1 bis 6,
bei der der Motorabschnitt (20, 120, 220) einen O-Ring (84) aufweist, der in einem radialen Zwischenraum zwischen dem Gehäuse (12) und dem Halterungshauptkörperabschnitt (82) angeordnet ist.

8. Eine Pumpenvorrichtung (10, 110, 210, 310), die folgende Merkmale aufweist:
einen Motorabschnitt (20, 120, 220) mit einer Welle (41, 141, 241), deren Mitte sich an einer sich axial erstreckenden Mittelachse (J) befindet, einem Rotor (40), der an der Welle (41, 141, 241) fixiert ist, und einem Stator (50), der an einer radial äußeren Seite des Rotors (40) angeordnet ist;
einen Pumpenabschnitt (30, 230, 330), der an einer Axialseite des Motorabschnitts (20, 120, 220) angeordnet ist und durch den Motorabschnitt (20, 120, 220) angetrieben wird;
ein zylindrisches Gehäuse (12), das den Motorabschnitt (20, 120, 220) und den Pumpenabschnitt (30, 230, 330) hält und einen Öffnungsabschnitt an der anderen Axialseite aufweist;
eine Motorabdeckung (13), die an der anderen Axialseite des Gehäuses (12) angebracht ist und die andere Axialseite des Motorabschnitts (20, 120, 220) bedeckt,
wobei der Motorabschnitt (20, 120, 220) folgende Merkmale aufweist:
einen Sensormagneten (72), der an der anderen Axialseite von dem Stator (50) angeordnet ist und an einer Außenumfangsoberfläche der Welle (41, 141, 241) fixiert ist;
eine Sammelschieneneinheit (80), die in dem Öffnungsabschnitt angeordnet ist; und
einen Rotationssensor (71), der durch die Sammelschieneneinheit (80) gehalten wird und dem Sensormagneten (72) axial zugewandt ist,
wobei die Sammelschieneneinheit (80) eine Sammelschiene (91), die elektrisch mit dem Rotationssensor (71) verbunden ist, und eine Sammelschienenhalterung (81) aufweist, die die Sammelschiene (91) hält,
die Sammelschienenhalterung (81) einen zylindrischen Halterungshauptkörperabschnitt (82) aufweist, der an einer radial inneren Seite des Öffnungsabschnitts angeordnet ist,
wobei der Pumpenabschnitt (30, 230, 330) folgende Merkmale aufweist:
einen Innenrotor (61), der an der Welle (41, 141, 241) angebracht ist;
einen ringförmigen Außenrotor (62), der eine radial äußere Seite des Innenrotors (61) umgibt;
einen Pumpenkörper (31), der den Innenrotor (61) und den Außenrotor (62) unterbringt; und
eine Pumpenabdeckung (32, 232, 332), die an einer Axialseite des Pumpenkörpers (31) angebracht ist,
wobei der Pumpenkörper (31) eine Pumpenkammer (33), die von einer Oberfläche an einer Axialseite in Richtung der anderen Axialseite zurückgesetzt ist und den Innenrotor (61) und den Außenrotor (62) unterbringt, und ein Durchgangsloch (31a) aufweist, durch das die Welle (41, 141, 241) den Pumpenkörper (31) axial durchdringt,
die Pumpenabdeckung (32, 232, 332) einen Einlass (32a, 332a) und einen Auslass (32b, 332b) aufweist, die in Kommunikation mit der Pumpenkammer (33) stehen, und
ein Endabschnitt an der einen Axialseite der Welle (241) mit einem Verbindungsabschnitt (241d) versehen ist, der mit einem anderen Bauteil verbindbar ist.

9. Die Pumpenvorrichtung (10, 110, 210, 310) gemäß Anspruch 8,
bei der der Endabschnitt an einer Axialseite der Welle (241) an einer Axialseite von dem Innenrotor (61) angeordnet ist und
ein konkaver Unterbringungsabschnitt (232c) zu einer Oberfläche an der anderen Axialseite der Pumpenabdeckung (32, 232, 332) vorgesehen ist, die in Richtung einer Axialrichtung zurückgesetzt ist, und den Endabschnitt an einer Axialseite der Welle (241) unterbringt.

10. Die Pumpenvorrichtung (10, 110, 210, 310) gemäß Anspruch 8,
bei der der Auslass (32b, 332b) die Pumpenabdeckung (32, 232, 332) axial durchdringt und die Welle (241) axial überlappt.

11. Die Pumpenvorrichtung (10, 110, 210, 310) gemäß Anspruch 10,
bei der der Endabschnitt an einer Axialseite der Welle (241) innerhalb des Auslasses (32b, 332b) angeordnet ist.

## Revendications

1. Dispositif de pompage (10, 110, 210, 310) comprenant:
une partie de moteur (20, 120, 220) présentant un arbre (41, 141, 241) présentant son centre sur un axe central s'étendant axialement (J), un rotor (40) qui est fixé à l'arbre (41, 141, 241), et un stator (50) qui est disposé d'un côté radialement extérieur du rotor (40);
une partie de pompage (30, 230, 330) qui est disposée d'un côté axial de la partie de moteur (20, 120, 220), et entraînée par la partie de moteur (20, 120, 220);
un boîtier cylindrique (12) qui contient la partie de moteur (20, 120, 220) et la partie de pompage (30, 230, 330), et présente une partie d'ouverture de l'autre côté axial; et
un capot de moteur (13) qui est fixé à l'autre côté axial du boîtier (12), et recouvre l'autre côté axial de la partie de moteur (20, 120, 220), la partie de moteur (20, 120, 220) comportant:
un aimant de détection (72) qui est disposé de l'autre côté axial du stator (50), et fixé à une surface circonférentielle extérieure de l'arbre (41, 141, 241);
une unité de jeu de barres (80) disposée dans la partie d'ouverture;
une plaque de circuit (70) qui est maintenue par l'unité de jeu de barres (80); et
un capteur de rotation (71) qui est fixé à la plaque de circuit (70) et fait face axialement à l'aimant de détection (72),
l'unité de jeu de barres (80) présentant un jeu de barres (91) qui est connecté électriquement au capteur de rotation (71) et un support de jeu de barres (81) qui maintient le jeu de barres (91),
le support de jeu de barres (81) présentant une partie de corps principal de support cylindrique (82) qui est disposée d'un côté radialement intérieur de la partie d'ouverture,
la partie de pompage (30, 230, 330) comportant:
un rotor intérieur (61) qui est fixé à l'arbre (41, 141, 241);
un rotor extérieur annulaire (62) qui entoure un côté radialement extérieur du rotor intérieur (61);
un corps de pompe (31) qui reçoit le rotor intérieur (61) et le rotor extérieur (62); et
un couvercle de pompe (32, 232, 332) qui est fixé à un côté axial du corps de pompe (31),
dans lequel la plaque de circuit (70) présente un trou traversant de plaque de circuit (70c) qui pénètre axialement dans la plaque de circuit (70), et l'axe central (J) de l'arbre (41, 141, 241) passe à travers le centre dudit trou traversant (70c), et
une partie d'extrémité de l'autre côté axial de l'arbre (41, 141) est pourvue d'une partie de connexion (41b, 141c) qui peut être connectée à un autre élément.

2. Dispositif de pompage (10, 110, 210, 310) selon la revendication 1,
dans lequel la partie de connexion (41b, 241d, 141c) est une partie de rainure (41b, 241d) qui est évidée de la partie d'extrémité de l'autre côté axial de l'arbre (41, 141, 241) vers l'un côté axial, et s'étend dans une direction qui est orthogonale à une direction axiale.

3. Dispositif de pompage (10, 110, 210, 310) selon la revendication 1,
dans lequel la partie de connexion (41b, 241d, 141c) est une partie convexe (141c) qui ressort de la partie d'extrémité de l'autre côté axial de l'arbre (41, 141, 241) vers l'autre côté axial, et s'étend dans une direction qui est orthogonal à la direction axiale.

4. Dispositif de pompage (10, 110, 210, 310) selon la revendication 2 ou 3,
dans lequel la partie de connexion (41b, 241d, 141c) s'étend dans la direction radiale à travers l'axe central (J).

5. Dispositif de pompage (10, 110, 210, 310) selon l'une quelconque des revendications 1 à 4,
dans lequel l'autre élément est une unité d'entraînement (RD) qui fait tourner l'arbre (41, 141, 241).

6. Dispositif de pompage (10, 110, 210, 310) selon l'une quelconque des revendications 1 à 5,
dans lequel l'arbre (41, 141, 241) passe à travers le trou traversant (70c) de la plaque de circuit, et la partie d'extrémité de l'autre côté axial de l'arbre (41, 141, 241) est disposée de l'autre côté axial de la plaque de circuit (70).

7. Dispositif de pompage (10, 110, 210, 310) selon l'une quelconque des revendications 1 à 6,
dans lequel la partie de moteur (20, 120, 220) présente un joint torique (84) qui est disposé dans un interstice radial entre le boîtier (12) et la partie de corps principal de support (82).

8. Dispositif de pompage (10, 110, 210, 310), comprenant:
une partie de moteur (20, 120, 220) présentant un arbre (41, 141, 241) présentant son centre sur un axe central s'étendant axialement (J), un rotor (40) qui est fixé à l'arbre (41, 141, 241), et un stator (50) qui est disposé d'un côté radialement extérieur du rotor (40);
une partie de pompage (30, 230, 330) qui est disposée d'un côté axial de la partie de moteur (20, 120, 220), et entraînée par la partie de moteur (20, 120, 220);
un boîtier cylindrique (12) qui contient la partie de moteur (20, 120, 220) et la partie de pompage (30, 230, 330), et présente une partie d'ouverture de l'autre côté axial;
un capot de moteur (13) qui est fixé à l'autre côté axial du boîtier (12), et recouvre l'autre côté axial de la partie de moteur (20, 120, 220), la partie de moteur (20, 120, 220) comportant:
un aimant de détection (72) qui est disposé de l'autre côté axial du stator (50), et fixé à une surface circonférentielle extérieure de l'arbre (41, 141, 241);
une unité de jeu de barres (80) disposée dans la partie d'ouverture; et
un capteur de rotation (71) qui est maintenu par l'unité de jeu de barres (80) et fait face axialement à l'aimant de détection (72),
l'unité de jeu de barres (80) présentant un jeu de barres (91) qui est connecté électriquement au capteur de rotation (71) et un support de jeu de barres (81) qui maintient le jeu de barres (91),
le support de jeu de barres (81) présentant une partie de corps principal de support cylindrique (82) qui est disposée d'un côté radialement intérieur de la partie d'ouverture,
la partie pompage (30, 230, 330) comportant:
un rotor intérieur (61) qui est fixé à l'arbre (41, 141, 241);
un rotor extérieur annulaire (62) qui entoure un côté radialement extérieur du rotor intérieur (61);
un corps de pompe (31) qui reçoit le rotor intérieur (61) et le rotor extérieur (62); et
un couvercle de pompe (32, 232, 332) qui est fixé à un côté axial du corps de pompe (31),
dans lequel le corps de pompe (31) présente une chambre de pompage (33) qui est en retrait par rapport à une surface d'un côté axial vers l'autre côté axial et reçoit le rotor intérieur (61) et le rotor extérieur (62), et un trou traversant (31a) à travers lequel l'arbre (41, 141, 241) pénètre axialement dans le corps de pompe (31),
le couvercle de pompe (32, 232, 332) présente une entrée (32a, 332a) et une sortie (32b, 332b) qui sont en communication avec la chambre de pompage (33), et
une partie d'extrémité de l'un côté axial de l'arbre (241) est pourvue d'une partie de connexion (241d) qui peut être connectée à un autre élément.

9. Dispositif de pompage (10, 110, 210, 310) selon la revendication 8,
dans lequel la partie d'extrémité d'un côté axial de l'arbre (241) est disposée d'un côté axial du rotor intérieur (61), et
une partie concave de logement (232c) est prévue sur une surface de l'autre côté axial du couvercle de pompe (32, 232, 332), laquelle est évidée dans une direction axiale et reçoit la partie d'extrémité d'un côté axial de l'arbre (241).

10. Dispositif de pompage (10, 110, 210, 310) selon la revendication 8,
dans lequel la sortie (32b, 332b) pénètre axialement dans le couvercle de pompe (32, 232, 332) et vient axialement en recouvrement avec l'arbre (241).

11. Dispositif de pompage (10, 110, 210, 310) selon la revendication 10,
dans lequel la partie d'extrémité d'un côté axial de l'arbre (241) est disposée à l'intérieur de la sortie (32b, 332b).
